# EUROPÄISCHE PATENTSCHRIFT

(11) **EP 0 834 884 B1**
(45) Veröffentlichungstag und Bekanntmachung des Hinweises auf die Patenterteilung: **19.02.2003**
(21) Anmeldenummer: 97116299.5
(22) Anmeldetag: 18.09.1997
(51) Int. Cl.: G21C 19/07

(54) **Brennelement-Lagergestell und Absorptionsstruktur mit einem Absorptionselement zur Absorption von Neutronen sowie Verfahren zur Herstellung eines Absorptionselements**
Fuel storage rack and neutron absorbing structure comprising a neutron absorbing element and method of manufacturing a neutron absorbing element
Râtelier de stockage et structure d'absorption comprenant un élément d'absorption de neutrons et procédé pour fabriquer un élément d'absorption

(30) Priorität: 30.09.1996 DE 19640390
(43) Veröffentlichungstag der Anmeldung: 08.04.1998
(73) Patentinhaber: Framatome ANP GmbH, 91050 Erlangen (DE)
(72) Erfinder: Niedner, Frank, 61440 Oberursel (DE)
(74) Vertreter: Tergau & Pohl Patentanwälte

(56) Entgegenhaltungen:
- EP-A- 0 107 889
- EP-A- 0 678 877
- US-A- 4 218 622
- US-A- 4 695 424
- US-A- 5 180 544
- US-A- 5 361 281

## Beschreibung

Die Erfindung betrifft ein Brennelement-Lagergestell und eine Absorptionsstruktur mit einem Absorptionselement zur Absorption von Neutronen sowie ein Verfahren zur Herstellung eines Absorptionselements.

Ein Absorptionselement dient zur Absorption von Neutronen, wie sie beispielsweise von Brennelementen emittiert werden, die in Kernkraftwerken eingesetzt werden. Es ist in der Regel Bestandteil einer Absorptionsstruktur. Eine solche Absorptionsstruktur nimmt dabei Neutronen emittierende, also radioaktiv strahlende Materialien, Bauteile oder Komponenten auf. In einer solchen Absorptionsstruktur können insbesondere abgebrannte Brennelemente aus einem Kernreaktor aufgenommen, transportiert oder gelagert werden. Bevorzugt werden solche Absorptionsstrukturen in Brennelementelagerbecken von Kernreaktoren eingesetzt, die mit Wasser gefüllt sind. Des weiteren werden solche Absorptionsstrukturen auch in Trockenlagern für Brennelemente verwendet. In der EP-0 385 187 A1 wird eine Absorptionsstruktur beschrieben, die auch zum Transport von Brennelementen geeignet ist.

Brennelement-Lagergestelle müssen eine hohe Strahlensicherheit, eine große mechanische Festigkeit und einen vergleichsweise geringen Platzbedarf zwecks Erzielung einer hohen Beladungsdichte aufweisen.

In der europäischen Patentschrift EP-0 537 615 B 1 wird ein Brennelement-Lagergestell beschrieben, das im wesentlichen aus mehreren annähernd quadratischen Schächten besteht. Die Wände dieser Schächte sind in ihrem Mittelteil nach außen gesickt. Sie bestehen aus einem Neutronen absorbierenden Stahl, sickt. Sie bestehen aus einem Neutronen absorbierenden Stahl, bevorzugt aus austenitischem Borstahl mit einem Borgehalt bis 2%, vorzugsweise zwischen 1% und 1,6%. Die Schächte stehen senkrecht auf einer Bodenplatte. Sie sind schachbrettartig 5 angeordnet. Infolgedessen umschließen jeweils vier dieser Schächte einen Raum, der in etwa die gleichen Abmessungen hat wie einer dieser Schächte. Die sich nahezu berührenden Kanten der Schächte sind miteinander durch Bleche verbunden. An den Außenseiten der Absorptionsstruktur sind die zwischen den Schächten liegenden Freiräume nur von drei Schächten umgeben. Anstelle eines Schachtes wird an der offenen Seite ein Blech aus dem gleichen Werkstoff angebracht, aus dem auch die Schächte bestehen. Zum Lagern kann jeweils ein Brennelement entweder in einen der Schächte oder in einen der von den Schächten gebildeten Zwischenräume eingebracht werden.

Ein weiteres Brennelement-Lagergestell wird beschrieben in der europäischen Patentanmeldung EP-0 385 187 A1. Dieses Lagergestell besteht im wesentlichen aus einer Bodenplatte, einem kastenförmigen Aufbau, der den Querschnitt der Bodenplatte hat, und einer inneren Struktur. Die innere Struktur enthält zwei Arten von Blechen, die jeweils bis etwa zur Mitte mehrere Schlitze enthalten. Vermittels der Schlitze können die Bleche so ineinander gesteckt werden, daß sich in der Draufsicht ein Gitter bildet. Es entsteht so eine Anzahl von Schächten, die zur Aufnahme von Brennelementen dienen. Diese Struktur wird in den kastenartigen Aufbau eingefügt und auf die Bodenplatte gesetzt. Als Werkstoff für dieses Lagergestell wird ein neutronenabsorbierendes Material, wie Borstahl, mit einer Dicke von 2 bis 4 mm vorgeschlagen. Die so gebildete Absorptionsstruktur kann auch zu Transportzwecken verwendet werden, wenn sie mit Transportösen ausgestattet ist.

Der Nachteil der beiden beschriebenen Absorptionsstrukturen besteht darin, daß der verwendete Borstahl relativ spröde ist. Dadurch ist seine Verarbeitung äußerst schwierig. Es entstehen hohe Bearbeitungsverluste, was die Herstellung verhältnismäßig teuer macht.

Es wurden bereits Vorschläge gemacht, anstelle der Bleche aus Borstahl austenitische Bleche ohne Bor oder mit nur geringem Borgehalt zu verwenden. Dies führt zu großen Abschirmdicken und hohem Platzbedarf bzw. zu geringer Beladungsdichte des Brennelement-Lagergestells.

Zur Absorption von Neutronen wurde in der US-PS 4 218 622 vorgeschlagen, auf ein Blech eine dünne Trägerfolie aufzubringen, die eine Polymermatrix aufweist, in die Borkarbidpartikel eingelagert sind. Gegen ein derartig beschichtetes Absorptionselement bestehen Bedenken im Hinblick auf die Langzeit-Strahlenbeständigkeit.

Probleme des Abriebs und der Beständigkeit der homogenen Verteilung des Neutronen absorbierenden Materials auf Trägerfolien können durch die Verwendung von sogenannten Sandwichblechen vermieden werden. Ein als Sandwichblech ausgebildetes Absorptionselement kann wie folgt aufgebaut sein: Zwei Bleche sind durch gitterartige Stege miteinander verbunden. Durch die gitterartigen Stege werden zwischen den Blechen allseitig abgeschlossene Hohlräume gebildet. In diese Hohlräume wird ein Neutronen absorbierendes Material - z.B. Bor, Hafnium und/oder Gadolinium - in Form von Pulver, von gesinterten Formteilen oder in Form einer viskpsen Masse eingebracht. Da die Bleche mit den Stegen verschweißt oder verlötet sein müssen, ist der Fertigungsaufwand für ein derartiges Absorbtionselement relativ hoch.

Einen hohen Fertigungsaufwand kann man vermeiden, wenn für die Absorptionselemente Bleche verwendet werden, die eine galvanisch abgeschiedene Kadmiumschicht aufweisen. Der Nachteil kadmiumbeschichteter Absorptionselemente besteht jedoch darin, daß Kadmium ein toxisches Metall ist und einen niedrigen Schmelzpunkt hat.

Zusammenfassend ist festzustellen, daß die Herstellung von Absorptionsstrukturen aus Borstahl mit hohen Materialverlusten durch die Bearbeitung verbunden und daher teuer ist. Und die erwähnten Absorptionselemente aus Verbundwerkstoffen weisen nur eine begrenzte Beständigkeit und Lebensdauer auf.

Aufgabe der Erfindung ist es, eine langzeitbeständige, Neutronen absorbierende Beschichtung für ein Absorptionselement zu ermöglichen. Die Aufgabe wird erfindungsgemäß durch ein Brennelement-Lagergestell mit einem Absorptionselement zur Absorption von Neutronen gelöst, das einen Grundkörper besitzt, der eine Neutronen absorbierende Beschichtung trägt, die eine Bor enthaltende Substanz aufweist, wobei die Beschichtung in einer Ebene Fugen enthält.

Die Fugen sind bevorzugt derart ausgebildet, dass die Beschichtung nach Art von Kacheln auf dem Grundkörper aufgebracht ist. Es ist dabei vorteilhaft, wenn die Fugen bis zum Grundkörper reichen, und zwar so, dass zwischen den einzelnen Kacheln der Beschichtung keine Verbindung aus dem Beschichtungsmaterial besteht.

Die Neutronen absorbierende Beschichtung kann entweder ein Bor enthaltendes Email oder eine Bor enthaltende Keramik sein.

Die Form der einzelnen Kacheln spielt vorliegend keine besondere Rolle. Die Kacheln können insbesondere rechteckig oder quadratisch ausgebildet sein. Sie könnten auch dreieckig sein.

Dadurch, daß die Beschichtung bevorzugt kachelartig ausgebildet ist und zwischen den einzelnen Kacheln Fugen existieren, sind die Differenzen zwischen der thermischen Ausdehnung des Grundkörpers und der thermischen Ausdehnung der einzelnen Kacheln erheblich kleiner, als dies bei einer großflächigen Beschichtung, die keine Unterbrechung im Schichtaufbau enthält, wäre. Infolgedessen sind die Spannungen zwischen Grundkörper und Beschichtung, die infolge unterschiedlicher Wärmeausdehnungskoeffizienten bei Temperaturänderungen auftreten, geringer. Hierdurch wird ein Abplatzen der Beschichtung vom Grundkörper vermieden. Eine weitere Minimierung der thermischen Spannungen läßt sich dadurch erreichen, daß das Material des Grundkörpers einen ähnlichen, d.h. annähernd gleichen thermischen Ausdehnungskoeffizienten besitzt wie die Beschichtung.

Auch mechanische Belastungen, die beispielsweise durch Verbiegen des Absorptionselementes auftreten, führen nicht zu einem Abplatzen der Beschichtung. Die Fugen des Absorptionselementes dienen als Sollbiegestellen. Dadurch werden die Spannungen, die zwischen dem Grundkörper und der Beschichtung bei Durchbiegung des Absorptionselementes auftreten, gering gehalten. Die unterschiedlichen Biegespannungen in Grundkörper und Beschichtung werden jeweils nur über die Länge einer einzelnen Kachel wirksam.

Eine Optimierung der Neutronen absorbierenden Wirkung der Beschichtung kann dadurch erreicht werden, daß die Beschichtung mit Bor-Isotopen der relativen Atommasse 10 (B10) angereichert wird. Natürliches Bor hat eine mittlere relative Atommasse von ca. 10,8. Demnach ist das Bor-10-Isotop besonders affin gegenüber freien Neutronen. B10 kommt etwa zu 18% in natürlichem Bor vor; bei der Anreicherung können beispielsweise 25% B10 erreicht werden. Der B10-Gehalt wird vorzugsweise gemäß einer zuvor berechneten Absorptionswirkung eingestellt. Ein besonderer Vorteil der B10-angereicherten Beschichtung liegt darin, daß bei ihrer Herstellung Verluste des teuren B10-Isotops vermieden werden.

Für eine bessere Haftung der Beschichtung kann zwischen Grundkörper und Beschichtung eine Haftschicht aufgebracht werden. Zum Schutz vor äußeren Einflüssen, die die Langzeitbeständigkeit, besonders die Haftung der Beschichtung auf dem Grundkörper beeinträchtigen, kann der mit der Neutronen absorbierenden Substanz beschichtete Grundkörper als Ganzes mit einer dünnen Schutzschicht, insbesondere mit einer Emaillierung, versehen werden. Diese Schutzschicht ist vorzugsweise frei von Bor und dient beispielsweise zum Schutz vor Korrosion infolge des Wassers in einem Brennelement-Nasslager.

Mehrere Absorptionselemente der beschriebenen Art, die kreuzweise zueinander angeordnet sind, bilden erfindungsgemäß eine Absorptionsstruktur, die zur Aufnahme und zur Abschirmung von Neutronen abstrahlenden Gegenständen geeignet ist.

Die Aufgabe wird erfindungsgemäß weiterhin gelöst, indem zur Herstellung eines Absorptionselements ein Grundkörper mit einer Neutronen absorbierenden Beschichtung versehen wird, die bevorzugt eine Bor enthaltende Substanz aufweist, wobei in die Beschichtung Fugen eingebracht werden.

Die Fugen, die den Kacheleffekt der Beschichtung bewirken, lassen sich durch verschiedene Verfahren in die Beschichtung einbringen. Gemäß einer ersten Version werden die Fugen in die Neutronen absorbierende Beschichtung dadurch eingebracht, dass auf den Grundkörper ein Raster aufgebracht wird, das die Auftragung der Beschichtungssubstanz, insbesondere des Emails oder der Keramik, an den Stellen, die das Raster einnimmt, verhindert. Nach der Beschichtung wird das Raster wieder vom Grundkörper entfernt, so dass an den Stellen, an denen es aufgebracht worden war, Fugen verbleiben.

Gemäß einer zweiten Version wird zunächst die Beschichtung aus einer Neutronen absorbierenden Substanz auf einen Grundkörper aufgetragen, und danach werden die Fugen in die Neutronen absorbierende Beschichtung eingebracht, insbesondere eingeschliffen. Mit anderen Worten: Es ist also möglich, den Grundkörper zuerst einheitlich zu beschichten, um die Fugen alsdann nachträglich in die Beschichtung einzubringen. Insbesondere können die Fugen dann eingeschliffen werden.

Ausführungsbeispiele der Erfindung werden anhand von 5 Figuren näher erläutert. Gleiche Elemente sind in den Figuren mit denselben Bezugszeichen versehen. Es zeigen:
- FIG 1: eine schematische Ausschnittsdarstellung einer Absorptionsstruktur zur Aufnahme von Brennelementen;
- FIG 2: eine Draufsicht eines Absorptionselementes mit Fugen, bei dem die Neutronen absorbierende Beschichtung nur auf einer Seite des Grundkörpers aufgebracht ist;
- FIG 3: einen seitlichen Schnitt des Absorptionselements von FIG 2;
- FIG 4: einen Seitenschnitt eines Absorptionselementes, das zusätzlich eine Korrosionsschutzbeschichtung trägt; und
- FIG 5: einen Seitenschnitt eines Absorptionselementes, das beidseitig eine Neutronen absorbierende Beschichtung mit Fugen trägt.

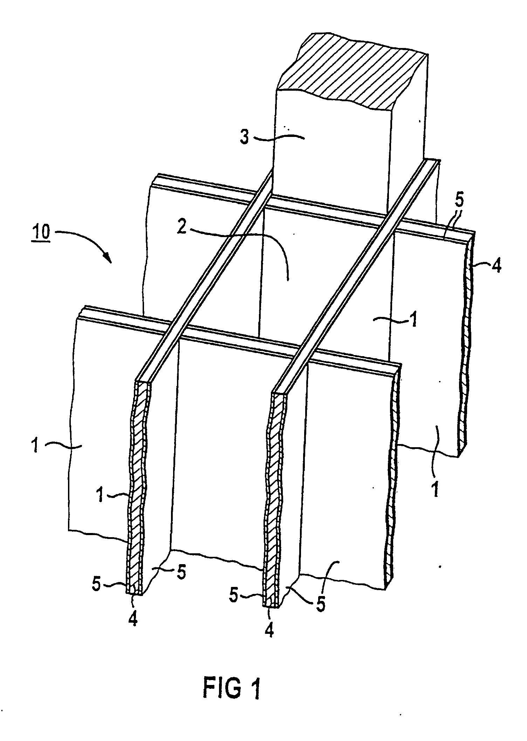

In FIG 1 ist die schematische Darstellung einer Absorptionsstruktur, die insgesamt das Bezugszeichen 10 hat, zu erkennen. Sie enthält sich kreuzende Absorptionselemente 1, die so zueinander angeordnet sind, daß sie in der Draufsicht ein orthogonales Gitter bilden. Infolge dieser Anordnung entstehen Schächte 2, die zur Aufnahme von Brennelementen 3 geeignet sind. Die Absorptionselemente 1 bestehen jeweils aus einem Grundkörper 4, der auf beiden Seiten eine Beschichtung 5 mit Kachelstruktur trägt. Zur besseren Übersichtlichkeit ist die Kachelstruktur der Beschichtung 5 in FIG 1 nicht dargestellt. Es handelt sich vorliegend um ein kompaktes Brennelement-Lagergestell, das auch bei Erschütterungen (z.B. Erdbeben) oder bei Deformationen nicht seine Neutronen abschirmende Wirkung verliert.

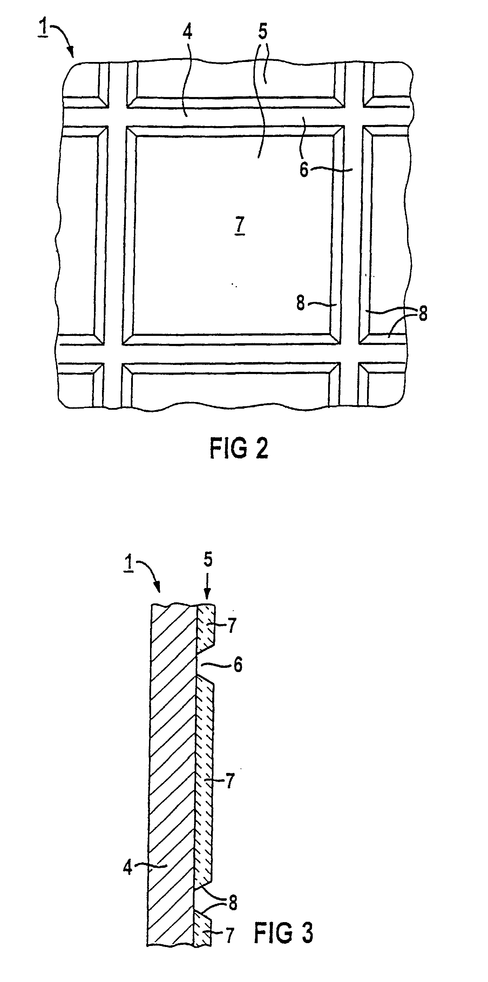

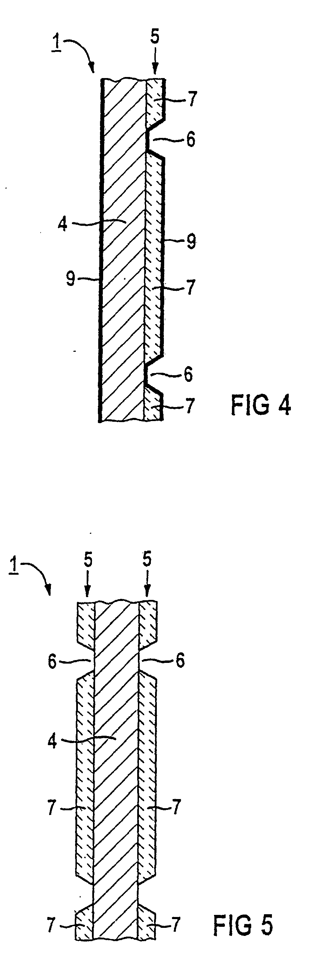

Die Figuren 2 und 3 zeigen in Draufsicht und seitlicher Schnittdarstellung einen Ausschnitt aus einem Absorptionselement 1. Bei dieser Ausführungsform ist der Grundkörper 4 ein metallisches Trägerblech, z.B. mit einer Dicke von ca. 2 mm. Es kann sich insbesondere um einen rostfreien Stahl handeln. Der Grundkörper 4 trägt auf einer Seite eine Neutronen absorbierende Beschichtung 5, die hier ein Email auf Borglasbasis ist. Diese Beschichtung 5 hat z.B. eine Dicke von ca. 1 mm. Sie enthält in etwa 25% Boroxid (B₂O₃). Zur Steigerung der Neutronenabsorptionswirkung kann die Beschichtung 5 mit Boratomen der relativen Atommasse 10, also durch B10, angereichert sein. Die Beschichtung 5 ist in regelmäßigen Abständen unterbrochen durch horizontal und vertikal verlaufende Fugen 6. Diese Fugen 6 reichen bis zum Grundkörper 4. Durch diese Fugen 6 enthält die Beschichtung 5 eine kachelartige Struktur. Die Ränder der rechteckigen Kacheln 7 sind bei dieser Ausführungsform mit Schrägen 8 versehen.

Die Fugen 6 können dadurch eingebracht werden, daß auf den Grundkörper 4 ein Raster, das hier nicht eingezeichnet ist, aufgelegt wird. Dadurch wird an den Stellen, an denen das Raster auf dem Grundkörper 4 aufliegt, während des Beschichtens kein Beschichtungsmaterial aufgebracht. Vorteilhafterweise hat das Raster die Gegenform zu der späteren Geometrie der Kachelränder. Bei der in den Figuren 2 und 3 dargestellten Ausführungsform wären das die Schrägen 8. Alternativ können die Fugen 6 auch dadurch eingebracht werden, daß sie in eine durchgehende Beschichtung 5 nachträglich eingeschliffen werden.

Figur 4 zeigt die Ausführungsform gemäß Figuren 2 und 3, wobei das Absorptionselement 1 als Ganzes mit einer vergleichsweise dünnen Schutzschicht 9 umgeben ist. Diese Schutzschicht 9 umgibt dabei sowohl den Grundkörper 4 als auch die Beschichtung 5. Sie liegt des weiteren infolge des Herstellprozesses auch in den Fugen 6 vor. Die Schutzschicht 9 ist vorzugsweise eine Emaillierung. Sie kann borfrei ausgeführt sein.

Figur 5 zeigt ein Absorptionselement 1, das beidseitig mit einer Neutronen abschirmenden Substanz beschichtet ist. Ein solches Absorptionselement 1 mit beidseitiger Beschichtung 5, die jeweils Kacheln 7 aufweist, die aus einem Email auf Borglas-Basis bestehen, findet vorteilhafterweise Anwendung im Inneren einer Absorptionsstruktur 10, beispielsweise also in Schächten 2 zur Aufnahme von Brennelementen 3, die Nachbarschächte aufweisen, die ebenfalls ein Brennelement 3 aufnehmen. Selbstverständlich kann auch das doppelseitig beschichtetes Absorptionselement 1 mit einer Schutzschicht 9 umgeben sein.

## Patentansprüche

1. Brennelement-Lagergestell mit einem Absorptionselement (1) zur Absorption von Neutronen, welches einen Grundkörper (4) besitzt, der eine Neutronen absorbierende Beschichtung (5) trägt, die eine Bor enthaltende Substanz aufweist,
**dadurch gekennzeichnet, dass** die Beschichtung (5) in einer Ebene Fugen (6) enthält.

2. Brennelement-Lagergestell nach Anspruch 1,
**dadurch gekennzeichnet, dass** die Fugen (6) bis zum Grundkörper (4) reichen, so dass die Beschichtung (5) nach Art von Kacheln (7) auf dem Grundkörper (4) aufgebracht ist.

3. Brennelement-Lagergestell nach Anspruch 1 oder 2,
**dadurch gekennzeichnet, dass** die Bor enthaltende Beschichtung (5) ein Email oder eine Keramik ist.

4. Brennelement-Lagergestell nach Anspruch 2 oder 3,
**dadurch gekennzeichnet, dass** die Kacheln (7) rechteckig oder quadratisch ausgebildet sind.

5. Brennelement-Lagergestell nach einem der Ansprüche 1 bis 4,
**dadurch gekennzeichnet, dass** der Grundkörper (4) eine etwa 2 mm starke Metallplatte ist, die mit einem Email auf Borglas-Basis beschichtet ist, deren Dicke etwa 1 mm beträgt.

6. Brennelement-Lagergestell nach einem der Ansprüche 1 bis 5,
**dadurch gekennzeichnet, dass** die Beschichtung (5) etwa 25 % Boroxid (B₂O₃) enthält.

7. Brennelement-Lagergestell nach einem der Ansprüche 1 bis 6,
**dadurch gekennzeichnet, dass** die Beschichtung (5) mit Bor-Isotopen der relativen Atommasse 10 angereichert ist.

8. Brennelement-Lagergestell nach einem der Ansprüche 1 bis 7,
**gekennzeichnet durch** eine zusätzliche, im Verhältnis zur Dicke der Neutronen absorbierenden Beschichtung (5) dünne, äußere Schutzbeschichtung (9), die aus einem Email besteht.

9. Brennelement-Lagergestell nach Anspruch 8,
**dadurch gekennzeichnet, dass** die Schutzbeschichtung (9) frei von Bor ist.

10. Brennelement-Lagergestell nach einem der Ansprüche 1 bis 9,
**dadurch gekennzeichnet, dass** der Grundkörper (4) aus einem Metall besteht, dessen Wärmeausdehnungskoeffizient annähernd gleich dem Wärmeausdehnungskoeffizienten der Neutronen absorbierenden Beschichtung (5) ist.

11. Absorptionsstruktur (10) zur Aufnahme und Abschirmung eines Neutronen abstrahlenden Gegenstandes (3) mit sich kreuzenden Absorptionselementen (1), die einen Grundkörper sowie eine darent aufgebrachte Neutronen absorbierende Beschichtung (5) mit einer Bor enthaltenden Substanz aufweisen,
**dadurch gekennzeichnet, dass** die Beschichtung (5) in einer Ebene Fugen (6) enthält.

12. Verfahren zur Herstellung eines Absorptionselements (1) zur Absorption von Neutronen für ein Brennelement-Lagergestell gemäß Anspruch 1 oder für eine Absorptionsstruktur gemäß Anspruch 11,
**dadurch gekennzeichnet, dass** ein Grundkörper mit einer Neutronen absorbierenden Beschichtung (5) versehen wird, und dass in die Neutronen absorbierende Beschichtung (5) Fugen (6) dadurch eingebracht werden, dass auf den Grundkörper (4) ein Raster aufgebracht wird, das die Auftragung der Substanz, insbesondere des Emails oder der Keramik, an den Stellen, die das Raster einnimmt, verhindert.

13. Verfahren zur Herstellung eines Absorptionselementes (1) zur Absorption von Neutronen für ein Brennelement-Lagergestell gemäß Anspruch 1 oder für eine Absorptionstruktur gemäß Anspruch 11,
**dadurch gekennzeichnet, dass** eine Beschichtung (5) aus einer Neutronen absorbierenden Substanz auf einen Grundkörper (4) aufgetragen wird, und dass danach Fugen (6) in die Neutronen absorbierende Beschichtung (5) eingebracht, insbesondere eingeschliffen werden.

## Claims

1. Fuel element storage rack comprising an absorption element (1) for the absorption of neutrons, which possesses a base member (4) that bears a neutron-absorbing coating (5) comprising a boron-containing substance, **characterised in that** the coating (5) contains joints (6) in a plane.

2. Fuel element storage rack according to claim 1, **characterised in that** the joints (6) extend up to the base member (4), so that the coating (5) is applied to the base member (4) after the manner of tiles (7).

3. Fuel element storage rack according to claim 1 or 2, **characterised in that** the boron-containing coating (5) is an enamel or a ceramic.

4. Fuel element storage rack according to claim 2 or 3, **characterised in that** the tiles (7) are of rectangular or square construction.

5. Fuel element storage rack according to one of claims 1 to 4, **characterised in that** the base member (4) is an approx. 2 mm thick metal plate which is coated with an enamel on a boron glass base whose thickness comes to about 1 mm.

6. Fuel element storage rack according to one of claims 1 to 5, **characterised in that** the coating (5) contains about 25% of boron oxide (B₂O₃).

7. Fuel element storage rack according to one of claims 1 to 6, **characterised in that** the coating (5) is enriched with boron isotopes of relative atomic mass 10.

8. Fuel element storage rack according to one of claims 1 to 7, **characterised by** an additional, outer protective coating (9) thin in comparison with the neutron-absorbing coating (5) and consisting of an enamel.

9. Fuel element storage rack according to claim 8, **characterised in that** the protective coating (9) contains no boron.

10. Fuel element storage rack according to one of claims 1 to 9, **characterised in that** the base member (4) consists of a metal whose thermal expansion coefficient is approximately equal to the thermal expansion coefficient of the neutron-absorbing coating (5).

11. Absorption structure (10) for receiving and shielding a neutron-irradiating object (3), with mutually intersecting absorption elements (1) which comprise a base member and, applied thereto, a neutron-absorbing coating (5) which comprises a boron-coating substance, **characterised in that** the coating (5) contains joints (6) in a plane.

12. Method for producing an absorption element (1) for the absorption of neutrons for a fuel element storage rack according to claim 1 or for an absorption structure according to claim 11, **characterised in that** a base member is provided with a neutron-absorbing coating (5), and that joints (6) are introduced into the neutron-absorbing coating (5) by a grid being placed on the base member (4), which grid prevents the application of the substance, in particular the enamel or the ceramic, at the points which the grid occupies.

13. Method for producing an absorption element (1) for the absorption of neutrons for a fuel element storage rack according to claim 1 or for an absorption structure according to claim 11, **characterised in that** a coating (5) consisting of a neutron-absorbing substance is applied to a base member (4), and that thereafter joints (6) are introduced into, in particular cut into, the neutron-absorbing coating (5).

## Revendications

1. Râtelier de stockage d'assemblages combustibles, comprenant un élément (1) d'absorption de neutrons qui a une pièce (4) de base portant un revêtement (5) absorbant les neutrons et ayant une substance contenant du bore, **caractérisé en ce que** le revêtement (5) comporte des rainures (6) dans un plan.

2. Râtelier de stockage d'assemblages combustibles suivant la revendication 1, **caractérisé en ce que** les rainures (6) vont jusqu'à la pièce (4) de base, de sorte que le revêtement (5) est déposé sur la pièce (4) de base à la manière de carreaux (7).

3. Râtelier de stockage d'assemblages combustibles suivant la revendication 1 ou 2, **caractérisé en ce que** le revêtement (5) contenant du bore est un émail ou une céramique.

4. Râtelier de stockage d'assemblages combustibles suivant la revendication 2 ou 3, **caractérisé en ce que** les carreaux (5) sont rectangulaires ou parallélépipédiques.

5. Râtelier de stockage d'assemblages combustibles suivant l'une des revendications 1 à 4, **caractérisé en ce que** la pièce (4) de base est une plaque métallique d'une épaisseur de 2 mm environ, qui est revêtue d'un émail à base de verre au bore dont l'épaisseur est d'environ 1 mm.

6. Râtelier de stockage d'assemblages combustibles suivant l'une des revendications 1 à 5, **caractérisé en ce que** le revêtement (5) contient environ 25 % d'oxyde de bore (B₂O₃).

7. Râtelier de stockage d'assemblages combustibles suivant l'une des revendications 1 à 6, **caractérisé en ce que** le revêtement (5) est enrichi en des isotopes du bore de masse atomique relative de 10.

8. Râtelier de stockage d'assemblages combustibles suivant l'une des revendications 1 à 7, **caractérisé par** un revêtement (9) supplémentaire extérieur de protection, qui est mince par rapport à l'épaisseur du revêtement (5) qui absorbe les neutrons et qui est en un émail.

9. Râtelier de stockage d'assemblages combustibles suivant la revendication 8, **caractérisé en ce que** le revêtement (9) de protection est exempt de bore.

10. Râtelier de stockage d'assemblages combustibles suivant l'une des revendications 1 à 9, **caractérisé en ce que** la pièce (4) de base est en un métal dont le coefficient de dilatation thermique est sensiblement égal au coefficient de dilatation thermique du revêtement (5) absorbant les neutrons.

11. Structure (10) d'absorption destinée à recevoir un objet (3) émettant des neutrons et à y faire écran, comprenant des éléments (1) d'absorption entrecroisés qui comportent une pièce de base, ainsi qu'un revêtement (5) absorbant les neutrons qui y est déposé et qui a une substance contenant du bore,
**caractérisée en ce que** le revêtement (5) comporte des rainures (6) dans un plan.

12. Procédé de fabrication d'un élément (1) d'absorption de neutrons pour un râtelier d'assemblages combustibles suivant la revendication 1 ou pour une structure d'absorption suivant la revendication 11,
**caractérisé en ce qu'**il est muni d'une pièce de base ayant un revêtement (5) absorbant les neutrons et **en ce qu'**il est ménagé, dans le revêtement (5) absorbant les neutrons, des rainures (6), **en ce qu'**il est déposé sur la pièce (4) de base une trame qui empêche le dépôt de la substance, notamment de l'émail ou de la céramique, aux endroits qui sont pris par la trame.

13. Procédé de fabrication d'un élément (1) d'absorption de neutrons pour un râtelier d'assemblages combustibles suivant la revendication 1 ou pour une structure d'absorption suivant la revendication 11, **caractérisé en ce que** l'on dépose sur une pièce (4) de base un revêtement (5) en une substance absorbant les neutrons et **en ce qu'**on ménage ensuite, notamment par meulage, des rainures (6) dans la couche (5) absorbant les neutrons.
